# EUROPEAN PATENT SPECIFICATION

(11) **EP 4 102 339 B1**
(45) Date of publication and mention of the grant of the patent: **11.06.2025**
(21) Application number: 22159114.2
(22) Date of filing: 28.02.2022
(51) Int. Cl.: G06F 1/16, G06F 1/20, H04B 1/3822, H04B 1/3877, H04M 1/04, H04M 1/72409, B60R 11/02

(54) **MOBILE CONVERSION APPARATUS FOR DOCKING CELLULAR DATA DEVICES**
MOBILE UMWANDLUNGSVORRICHTUNG ZUM ANDOCKEN VON ZELLULAREN DATENVORRICHTUNGEN
APPAREIL DE CONVERSION MOBILE POUR L'ACCUEIL DE DISPOSITIFS DE DONNÉES CELLULAIRES

(30) Priority: 09.06.2021 US 202163208781 P
(43) Date of publication of application: 14.12.2022
(73) Proprietor: Siyata Mobile Inc., Montreal H4C 2Z6 (CA)
(72) Inventor: Seelenfreund, Marc, Raanana (IL); Bracha, Gidi, Cochav Yair (IL)
(74) Representative: Weickert, Jonas

(56) References cited:
- US-A- 4 892 486
- US-A- 5 974 333
- US-A1- 2002 038 550
- US-A1- 2007 021 148
- US-A1- 2018 004 259
- US-A1- 2018 287 652
- US-A1- 2021 081 001

## Description

### TECHNICAL FIELD

The present invention relates to converters. More specifically this invention relates to a conversion apparatus used to couple a portable cellular device to a mobile communications interface within a vehicle.

### BACKGROUND

Portable radios devices are well in the communications art. Moreover, networks of portable cellular data devices such as a cellular push-to-talk (PTT) radio are known, and which enable users to communicate anywhere throughout the network. The networks may be limited to a particular closed setting such as the confines of a business premises. However, with the omnipresent Internet, the networks may be much broader (e.g., city-wide, country-wide, or global). Thus, communication across the entire globe is possible utilizing push-to-talk over cellular (PoC) which enables reliable communication across entire jurisdictions. PoC systems are used for transportation/trucking companies, border patrol, events, construction, and beyond.

The benefits of PoC systems include no costly infrastructure needed versus traditional radios that require costly infrastructure (such as repeaters) to be able to communicate over a large distance. PoC systems are also license-free which eliminates costly frequency licence fees. In addition, PoC systems often incorporate hands-free communication whereby users may safely communicate on the road via a speaker microphone, thus avoiding the liabilities associated with distracted driving.

In terms of the use of PoC systems within fleets of vehicles, these systems often rely upon a dedicated mobile radio unit that effectively functions as a mobile base station. Such dedicated mobile radio units are designed to be permanently mounted within a vehicle and to duplicate all functions of a portable PoC radio unit. However, in the general art of radio devices, there have been attempts to provide charging stations within a vehicle whereby a portable radio may be secured within a cradle to thereby charge the portable radio. Yet further, the cradle may provide other peripheral features such as an external microphone, speaker, and antenna. One such prior art cradle is the Saber^{™} Vehicular Adapter manufactured by Motorola, Inc.

Another prior art device exists in United States Patent No. 4,892,486 that disclosed a vehicular adaptor for a portable communications device, such as a cellular telephone, pager, or two-way radio, which includes a connector that aligns itself to a mating connector on the communication device. The connector permits spatial alignment of electrical contacts in the connector with electrical contacts in the communications device. A corrugated spring mounting clamp and a locating nest on the connector permit the alignment of connections.

Another prior art device exists in United States Patent No. 4,955,071 that disclosed a converter console for converting a portable radio to mobile operation, a sleeve for receiving the portable radio and improved mounting apparatus which positions the sleeve so the portable can be easily inserted and smoothly moves the sleeve into a loaded position in which the portable is connected for control by the console and for receiving power from the vehicle. The mounting apparatus holds the various contacts firmly together to prevent contact chatter. Also included are locking apparatus that prevent relative movement between the portable/sleeve and the housing to eliminate contact chatter under extreme vibration and, additionally, reduce theft and improper use.

Another prior art device exists in United Kingdom Patent Application Pub. No. GB 2,420,930 that disclosed an extension accessory for use with a mobile radio telephone in a vehicle is connectible to the radio telephone to provide auxiliary input and output audio transducers for speech input and output by a user. The extension accessory comprises a handset which may include a PTT switch as well as a microphone and speaker. A magnetic reed switch is used to detect the position of the accessory handset on a holder or cradle. Another cradle or holder couples the mobile radio telephone to an auxiliary antenna. Also described is a kit which includes the mobile radio telephone and the extension accessory and a method of using the kit to provide radio communication.

US 4 892 486 A relates to a vehicular adaptor for a portable communications device, such as a cellular telephone, pager, or two-way with a connector that aligns itself to a mating connector on the communication device. The connector permits spatial alignment of electrical contacts in the connector with electrical contacts in the communications device. A corrugated spring mounting clamp and a locating nest on the connector permit the alignment of connections.

US 2021/081001 A1 relates to a dock for a portable electronic device with a base, a cradle coupled to the base and defining an interior volume configured to receive the portable electronic device, and a security apparatus. The security apparatus is configured to move between a first position where the security apparatus is configured to couple to the portable electronic device, and a second position where the security apparatus is configured to disengage the portable electronic device. The dock includes a detect mechanism coupled to the security apparatus for movement relative to the cradle. The detect mechanism is configured to block insertion of the portable electronic device into the cradle when the security apparatus is in the first position.

US 2007/021148 A1 relates to a multi-media cradle adapted to receive a mobile phone comprises a housing and a cradle mounted to the housing for seating the mobile phone.

US 2018/287652 A1 relates to a ruggedized mobile mount for a portable handheld radio, including a detachment mechanism and indicator for removably attaching the handheld radio to the mobile mount.

US 5 974 333 A relates to an automobile acoustic unit for installation into an interior of an automobile. The automobile acoustic unit includes an audio source for generating audio signals, a chamber configured to receive and store a cellular phone, and a circuit for controlling and selecting the playback of audio signals from the audio source and signals from the cellular phone.

US 2018/004259 A1 relates to apparatuses, methods and storage medium associated with coolant systems for computer and electrical environments.

US 2002/038550 A1 relates to a compact self-contained thermoelectric cooler.

Based on the above, there is therefore a need for systems and/or methods that leverage the advantages of PoC systems while mitigating the various drawbacks of the prior art.

### SUMMARY

The present invention provides a mobile conversion apparatus for docking cellular data devices. The conversion apparatus is designed and configured to couple a portable cellular device to a mobile communications interface within a vehicle.

The present invention includes a mobile conversion apparatus for docking cellular data devices including push-to-talk over cellular (PoC) devices. The apparatus includes a Universal Serial Bus Type-C (USB-C) connection. The conversion apparatus is designed and configured to couple the PoC device to a mobile communications interface within a vehicle using the USB-C connection. The PoC device is horizontally insertable into the conversion apparatus, exposing only the top of the PoC device and only leaving the display and knob of the PoC device exposed on the face of the conversion apparatus. In this manner, the conversion apparatus effectively docks the PoC device, thereby connecting the two together via the USB-C connection.

In a first aspect, as defined in independent claim 1, the present invention provides a conversion apparatus for receiving a cellular data device, said apparatus comprising: an enclosure;an opening within said enclosure, said opening configured to accept therein said cellular data device; a plurality of ports for interfacing said cellular data device with at least one accessory; circuitry located within said enclosure and enabling said cellular data device to transfer data between a cellular network and at least one of said plurality of output ports. The conversion apparatus is characterized by an active cooling mechanism for active temperature control within said enclosure, said active cooling mechanism comprising: at least one thermoelectric cooling pad, wherein a hot side of said at least one thermoelectric cooling pad is adjacent a heat sink and a cool side of said at least one thermoelectric cooling pad is adjacent a cooling guide block; and at least two fans, wherein at least one of said at least two fans cools said heat sink and another of said at least two fans blows cool air from said cooling guide block into an interior of said enclosure.

Further advantageous features are defined in the dependent claims.

### BRIEF DESCRIPTION OF THE DRAWINGS

The present invention will now be described by reference to the following figures, in which identical reference numerals refer to identical elements and in which:
**Figure 1** is front perspective view of a conversion apparatus in accordance with the present invention incorporating a PoC device;
**Figure 2** is rear perspective view of the conversion apparatus in accordance with the present invention;
**Figure 3** is the conversion apparatus as shown in **Figure 1** and with an external microphone attached;
**Figure 4** is the conversion apparatus as shown in silhouette and revealing the PoC device incorporated therein;
**Figure 5** is front view of the conversion apparatus as shown in **Figure 1****;**
**Figure 6** is rear view of the conversion apparatus as shown in **Figure 1****;**
**Figure 7** is front perspective view of the conversion apparatus and utilizing a bottom mount configuration;
**Figure 8** is front perspective view of the conversion apparatus and utilizing a bracket mount configuration;
**Figure 9** is front view detail of a faceplate of the conversion apparatus;
**Figure 10** is front view detail of the conversion apparatus with the faceplate removed;
**Figure 11** is top internal view of the conversion apparatus revealing internal details thereof;
**Figures 12** through **15** are various detailed views indicating air flow points located throughout the conversion apparatus;
**Figure 16** is a perspective cut-away view of the cooling mechanism of the conversion apparatus;
**Figure 17** is an expanded view of the cooling mechanism as shown in **Figure 16****;**
**Figure 18** is a top perspective view of an assembled cooling mechanism of the conversion apparatus in accordance with the present invention;
**Figure 19** is three-dimensional side view of the conversion apparatus in accordance with the present invention showing external fastener features;
**Figure 20** is three-dimensional top view of the conversion apparatus in accordance with the present invention showing external fastener features;
**Figure 21** through **24** illustrate one possible configuration of a latching mechanism related to insertion of the PoC device with the conversion apparatus in accordance with the present invention.

### DETAILED DESCRIPTION

The present invention provides a mobile conversion apparatus for docking cellular data devices including PoC devices. PoC devices, in accordance with the present invention, are PTT radio devices operating within a cellular network that are capable of providing data connections via standard Internet Protocol (IP). The PoC devices intended for use with the present invention are preferably those that include a Universal Serial Bus Type-C (USB-C) connection. The conversion apparatus is designed and configured to couple the PoC device to a mobile communications interface within a vehicle using the USB-C connection. The PoC device is horizontally insertable into the conversion apparatus exposing only the top of the PoC device, leaving only the display and knob of the PoC device exposed on the face of the conversion apparatus. In this manner, the conversion apparatus effectively docks the PoC device, thus connecting the two together via the USB-C connection.

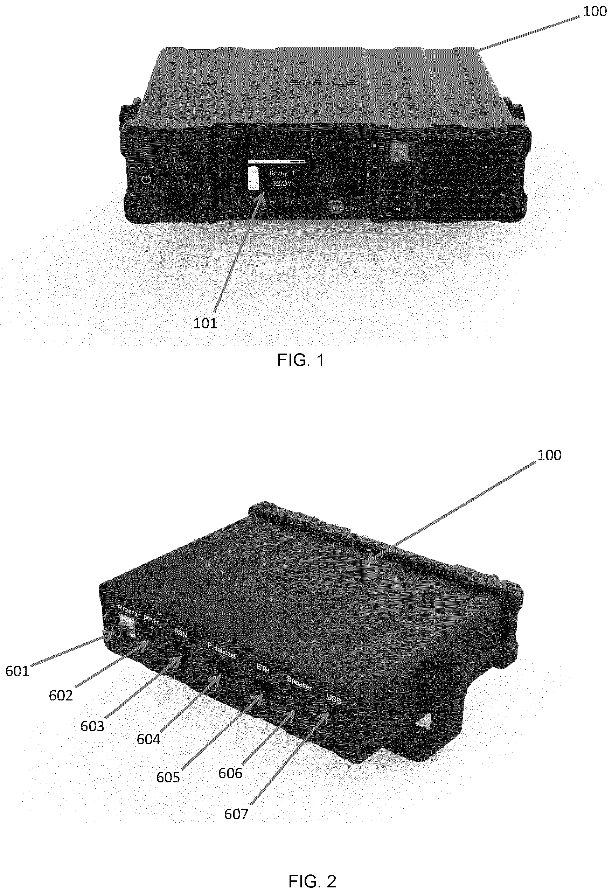

With reference to **Figure 1****,** there is shown a front perspective view of a conversion apparatus **100** in accordance with one implementation of one aspect of the present invention and which incorporates a PoC device **101.** Here, the horizontal orientation of the PoC device **101** inserted within the conversion apparatus is shown such that a user viewing the conversion apparatus **100** would consider the two separate parts to be a uniformly integrated unit. This aspect of the present invention has the advantage that a high level of visual integration is provided by incorporating the PoC device **101** entirely within the conversion apparatus **100** with only the top-most surface of the PoC device **101** remaining flush with the viewable faceplate of the conversion apparatus **100.** As should be clear, illustrated and described in this document is simply one implementation of many possible implementations of the various aspects of the present invention.

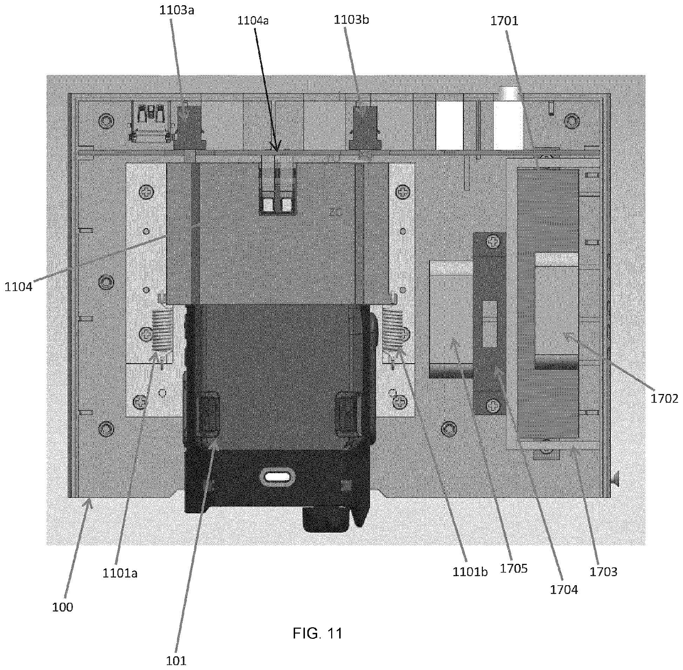

With reference to **Figure 2** there is shown a rear perspective view of the conversion apparatus **100** in accordance with one implementation of the present invention. Advantageously, this implementation of the conversion apparatus **100** includes a series of ports which allow the conversion apparatus **100** to connect to a variety of in-vehicle elements. It should be understood that the USB-C connection (further described hereinbelow with reference to **Figure 11****)** between the conversion apparatus and the PoC device enables functionality of each of the ports.

The ports shown include an antenna port **601** for coupling the antenna of the PoC device to an external antenna (e.g., roof-mounted vehicle antenna) to act as a booster and to thereby improve the cellular signal to the PoC device. Such an antenna port **601** is preferably of the FAKRA (D code) connector type that provides a high-quality radio frequency connection point. This type of connector also allows for possible insertion of an in-line signal booster (not shown) between the antenna port 601 and an external antenna. Other types of antenna ports are, of course, possible and may be used in other implementations.

The ports shown in **Figure 2** also include a power connection port **602.** The power connection port **602** is preferably a four-pin type connector that allows for 12V/24V power. Onboard electronics within the conversion apparatus **100** is configured to provide for sensing the vehicle ignition and muting the radio through the power connection port **602.** Other types of power connectors may also be used with this or other implementations of the present invention.

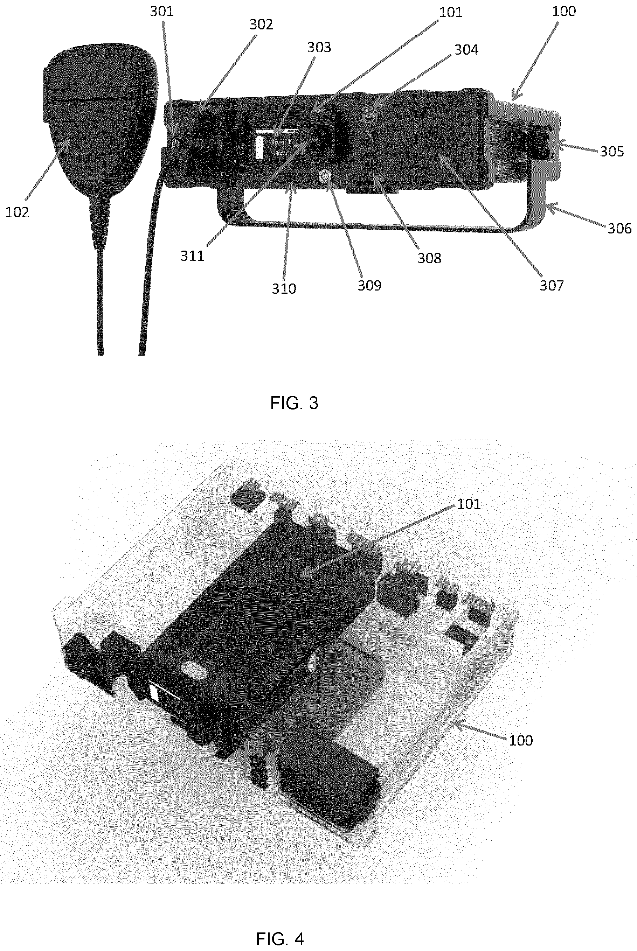

The ports shown in **Figure 2** also include a remote speaker microphone (RSM) connection port **603.** The RSM port **603** located in the rear of the conversion apparatus **100** is a type RJ45 jack that is intended for connecting the existing speaker/microphone capabilities of the vehicle with the PoC device **101.** An additional similar RSM port is provided on the front faceplate of the conversion apparatus (as will be discussed further with regard to **Figure 3** below) for a palm microphone.

The ports shown in **Figure 2** also include a privacy handset connection port **604.** The privacy connection port **604** is a type RJ50 jack and may be utilized for a privacy headset connection (not shown) that also includes a PTT button allowing a user to make a private PTT call. Other types of jacks for use with other types of connection ports may also be used for this and other implementations of the present invention.

The ports shown in **Figure 2** also include a network interface port **605** (e.g. an Ethernet port). The network interface port **605** supplies a network connection (e.g. an Internet connection) from the PoC device to other IP devices located in the vehicle such as, but not limited to, an external laptop, digital video record (DVR) systems, or the like through the cellular data connection of the PoC device. This arrangement has the advantage of enabling robust tethering of network connectivity (e.g. Internet connectivity) to a vehicle in a quick and easy manner, and without any need for any additional wireless modem mechanisms.

The ports shown in **Figure 2** also include a two-pin speaker port **606.** The speaker port **606** is provided for a user to optionally utilize an additional external speaker for audio output in any location convenient to the user such as, but not limited to, an external speaker placed more efficiently near a driver's head.

The ports shown in **Figure 2** also include a connection port **607** (e.g. a USB port). The connection port **607** located on the rear of the conversion apparatus **100** may be used as a USB On-The-Go (OTG) connection thereby enabling the PoC device to act as a host, allowing other USB devices, such as USB flash drives, digital cameras, mouse or keyboards, to be attached. It should be clear that the USB port may use any number of possible USB port implementations. As such, the USB port may be a USB-A, USB-B, or USB-C port. For greater compatibility with current and future equipment, a USB-C port may be used. As an alternative, multiple USB ports may be present on the conversion apparatus.

With reference to **Figure 3****,** the conversion apparatus **100** with a PoC device **101** inserted therein is shown in a manner similar to **Figure 1** but with an external palm microphone **102** attached to a front facing RSM port (not visible). As shown, the PoC device **101** is advantageously recessed into the front faceplate of the conversion apparatus 100 such that the top of the PoC device **101** is substantially flush with the planar surface of the faceplate. This enables the top of the PoC device **101** which may include a screen **303** and a volume/channel knob **311** to be visible to a user. The faceplate of the conversion apparatus **100** further includes a rotary knob **302** for volume/channel selection. The internal electronics of the conversion apparatus **100** are configured to enable the rotary knob **302** to act as volume or channel selection based on what the knob **311** of the PoC device **101** does. For example, this means that if the PoC device's knob **311** is set to volume control, then the rotary knob **302** will act as channel selection, and vice versa. This volume/channel functionality provides an efficient use of the controls of the front faceplate while providing a user-friendly interface.

It should be clear that it is preferable that the PoC device and the conversion apparatus be each configured to specifically operate and match one another. For such implementations, as shown in the figures, the conversion apparatus would be specifically configured to accommodate a specific model and make of a PoC device. However, in some implementations, the conversion apparatus may be generic in design and configuration so as to accommodate multiple different models of PoC devices. Depending on the configuration of the conversion apparatus and on the capabilities of specific models of PoC devices, the conversion apparatus may have a feature set that is different (or smaller than) than the feature set described in this document.

Returning to **Figure 3****,** the faceplate of the conversion apparatus **100** also includes a power button **301** allowing powering on and off the conversion apparatus **100.** In one implementation, the power button engages/disengages the power circuitry for the conversion apparatus. The location of the power button **301** is arranged such that inadvertent engagement by the user is avoided. The faceplate of the conversion apparatus **100** also includes four programmable function keys **308.** While four are shown in accordance with the present invention, it should be understood that there may be more or less such keys. However, four are preferred such that the faceplate remains uncluttered and user-friendly. The function keys **308** may be used for specific group or channel assignments predetermined and programmable by the user. In other implementations of the present invention, the function keys may have predetermined and fixed functions or their functions may be user programmable as necessary. Of course, in other implementations, such function keys may be omitted.

The faceplate of the conversion apparatus **100** also includes an SOS button **304** for emergency broadcast by a user. The SOS button **304** is preferably enlarged and is brightly colored in order to avoid any confusion by the user. Internal electronics may be programmed, for example, such that the SOS button **304** engages a geolocating capability of the PoC device **101** and/or makes an automated call to a central dispatch or emergency services (e.g., "911" systems). The faceplate also includes a grill **307** under which an audio speaker is provided. It should be understood that the speaker is intended for basic operation under low noise conditions such that a user may wish to utilize an external speaker and/or headset as previously described. It should also be clear that, while an SOS button is useful, other implementations of the present invention may omit such a feature.

The faceplate of the conversion apparatus **100** also includes a locking mechanism **309** which the user may optionally engage to secure the PoC device **101** within the conversion apparatus **100.** If the locking mechanism **309** is engaged and thus the PoC device **101** is locked into place, the user is precluded from ejecting the PoC device **101** from its position within the conversion apparatus **100.** Ejecting the PoC device **101** from its position is accomplished by an eject button **310** placed on the faceplate below the PoC device **101.** By locking the PoC device **101** in place via the locking mechanism **309,** inadvertent release of the PoC device may be advantageously avoided. It should be clear that there are many mechanisms by which the locking mechanism may be implemented. Provided and described below is one exemplary example of such a locking mechanism and nothing in this document should be taken as limiting the scope of such a mechanism to only that which is described herein.

With further reference to **Figure 3****,** the embodiment of the present invention is shown in a configuration utilizing a mounting bracket **306.** The flat bottom edge of the mounting bracket may be screwed or riveted into place onto any suitable flat surface inside the vehicle in which the invention is used. The positional angle of the conversion apparatus **100** may be adjusted by the user via two mounting tighteners **305** (one visible) which serve to affix the conversion apparatus **100** within the mounting bracket **306.** The mounting tighteners **305** may be loosened and tightened as necessary to allow rotation of the conversion apparatus relative to the mounting bracket **306.**

With reference to **Figure 4****,** the relationship of the PoC device **101** within the conversion apparatus **100** is shown for one exemplary implementation of the present invention. Here, the conversion apparatus **100** is shown in silhouette and reveals the inner space in which the PoC device is incorporated horizontally in a manner similar to insertion of a cassette into a tape player. This exemplary arrangement provides advantageous ease of use to a user by quickly and easily inserting and removing the PoC device to/from its position within the conversion apparatus **100.**

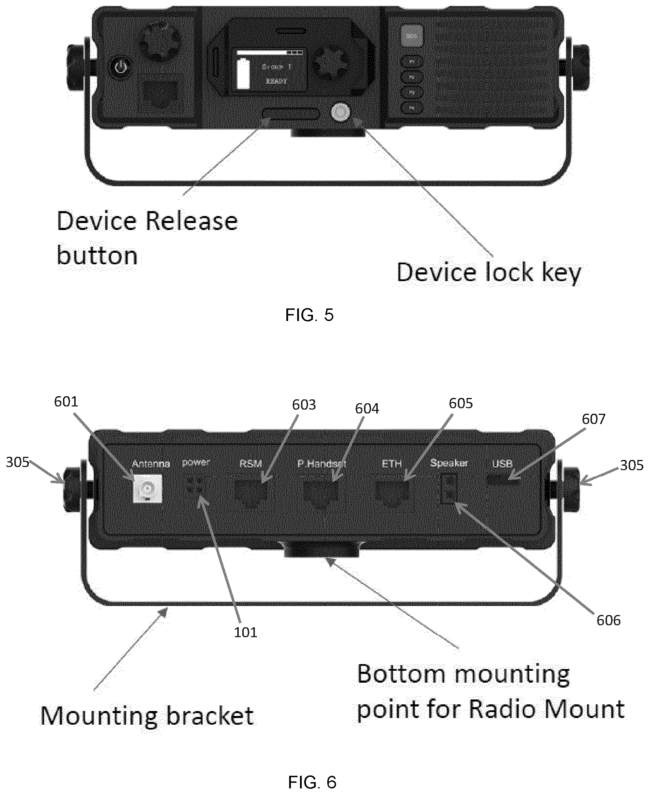

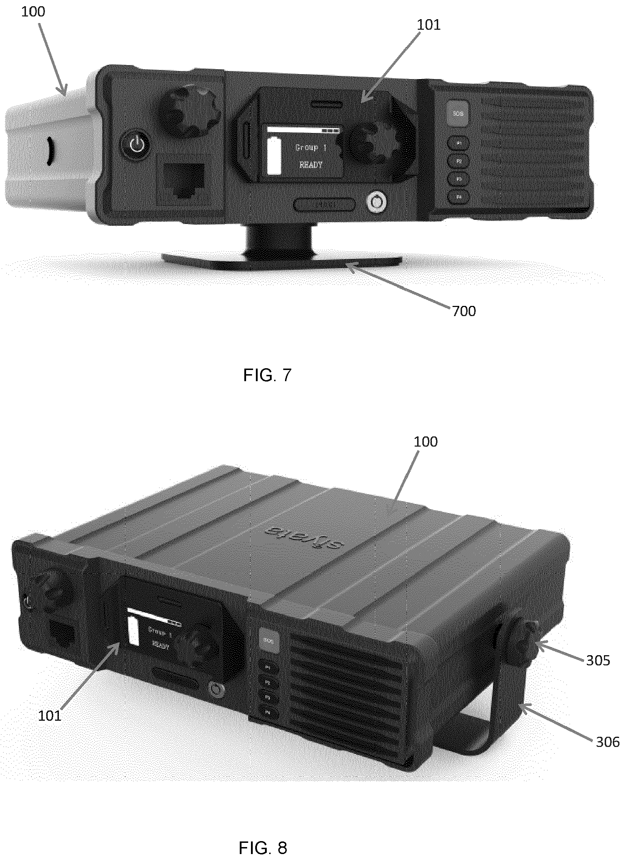

With reference to **Figure 5****,** a front view of the conversion apparatus is provided. Here, the two mounting tighteners are visible at either side of the conversion apparatus. Likewise, **Figure 6** is rear view of the conversion apparatus as shown in **Figure 1** and clearly shows ports **601** through **607** along with the two mounting tighteners **305.** In **Figure 6****,** the bottom mounting point is also visible and represents an alternative mounting capability in lieu of a mounting bracket. Such a bottom mount configuration is shown in **Figure 7** and which includes a mounting base **700** instead of the mounting bracket. The mounting base **700** is used to secure the conversion apparatus **100** to a suitable surface in the user's vehicle. In contrast, **Figure 8** is front perspective view of the conversion apparatus **100** and illustrates a bracket mount configuration. In either a bottom mount or bracket mount configuration, it should be readily apparent that the brackets may be affixed to a vehicle surface by any manner including, but not limited to, screws, rivets, adhesives, magnets, or the like.

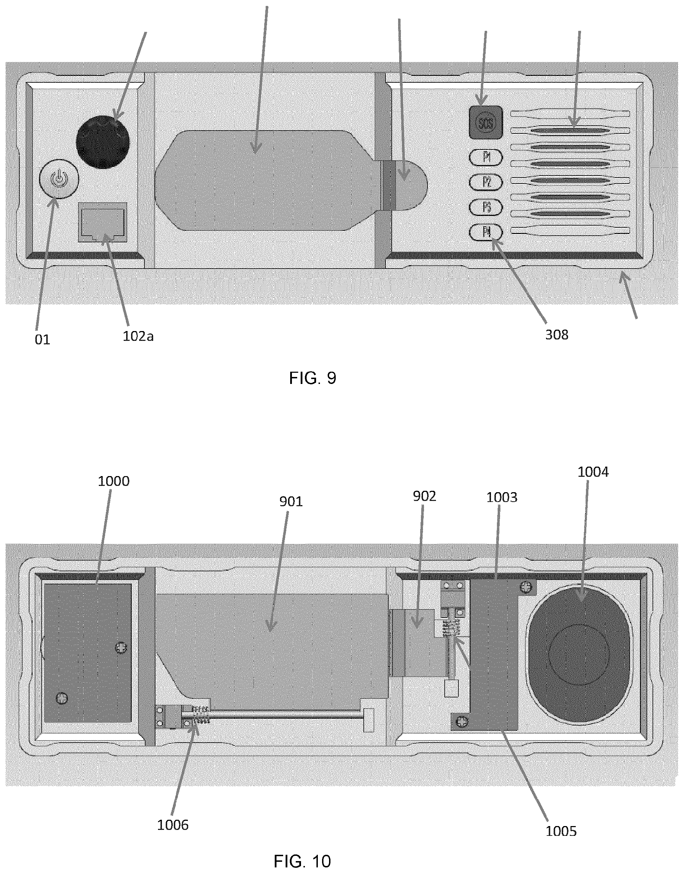

With reference to **Figure 9****,** there is shown a front view detail of a simplified version of the faceplate of the conversion apparatus **101** in accordance with one implementation of the invention and without any PoC device inserted therein. Here, like-parts including power button **101,** knob **302,** SOS button **304,** function keys **308** and speaker grill **307** are shown as previously described. In addition, the front facing RSM port **102a** (analogous to rear RSM port **603)** is shown which accommodates the external palm microphone (element **102** shown and described above with regard to **Figure 3****).** Two dust plates **901** and **902** are visible where the PoC device would normally be inserted. These dust plates are spring-loaded and retained in place to normally block the opening into which the PoC device is inserted thereby preventing dust and unwanted debris from entering the space otherwise occupied by the PoC device. As should be clear, the configuration illustrated in **Figure 9** is only one example and many other configurations and implementations are possible. As an example, while **Figure 9** illustrates the use of dust plates **901** and **902,** in some configurations and implementations, such dust places may be omitted.

With reference to **Figure 10****,** there is shown a front view detail similar to that of **Figure 9** but with the faceplate removed. Here, the two dust plates **901** and **902** are again visible though now in their entirety along with the springs **1006** and **1005** which hold, respectively, dust plates **901** and **902** in a normally closed position. Also visible are the printed circuit boards **1000** and **1003** which connect to the faceplate controls previously described with regard to **Figure 3****.** The internal speaker **1004** is also shown in place and is of a known type of speaker such as, but not limited to, a low-profile piezoelectric speaker. It should be understood that the specifics with regard to the printed circuit boards in terms of volume, power, channel selection and the like are well known in the electronics art and are outside the scope of the present invention, thus will not be further described herein. It should also be understood that the configuration illustrated in **Figure 10** is one specific implementation of the present invention. Other configurations are possible and are within the scope of the present document and of the present invention.

With reference to **Figure 11****,** there is shown a top internal schematic view of the conversion apparatus **100** with a PoC device **101** inserted therein. Here, the internal details are revealed including the ejection and the cooling mechanisms. As previously discussed, a user may eject the PoC device **101** from its position within the conversion apparatus **100** by using the eject button (element **310** shown in **Figure 3****).** When normally retained in place, the PoC device **101** will be connected to the conversion apparatus by internal connection points **1104** and **1104a.** Stops (or bumpers) **1103a** and **1103b** assist in preventing unwanted bumping of the PoC device **101** against the rear of the conversion apparatus **100.** Springs **1101a** and **1101b** are used to mechanically facilitate ejection of the PoC device upon user engagement of the eject button. It should be clear that internal connection point **1104** couples the PoC device to the conversion apparatus for charging while internal connection point **1104a** is a USB-C type connection point that provides a data connection point between the PoC device and the conversion apparatus. It should also be clear that **Figure 11** shows elements useful in one embodiment of the sleeve and locking mechanism. An alternative locking mechanism will be explained further below.

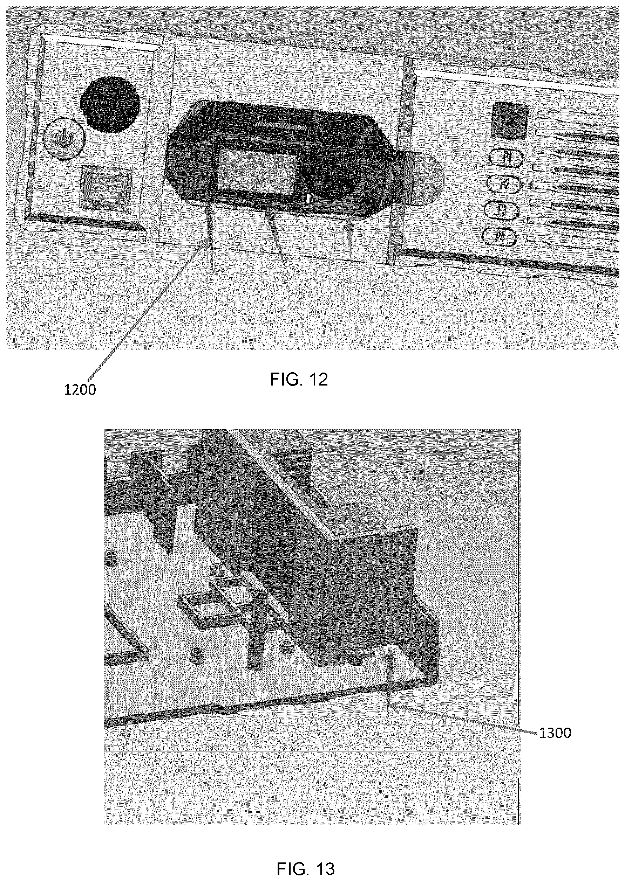

With further reference to **Figure 11****,** a cooling mechanism according to the invention as claimed is shown. The cooling mechanism advantageously utilizes an active cooling system within the enclosure embodying the conversion device **100.** The cooling system includes fans **1702** and **1705** along with a cooling guide block **1704.** A thermoelectric cooling pad **1600** that cools one side and heats up another side is used. The cooling guide block **1704** sits on the cool side of the cooling pad **1600** and the cooling guide block **1704** receives hot air from within the enclosure and cools that hot air. The fan **1705** blows the cooled air from the cooling guide block **1704** into the enclosure. The thermoelectric cooling pad **1600** sits within a cutout area of a layer of ethylene-vinyl acetate (EVA) foam **1703** and the hot side of the cooling pad **1600** sits adjacent a heat sink **1701.** The heat from the hot side of the cooling pad **1600** is absorbed by the heat sink **1701** and this heat sink **1701** is cooled by fan **1702.** The air flow path utilized by the cooling system is shown by directional arrows **1200, 1300, 1400,** and **1500** in **Figures 12** through **15****,** respectively. It should also be noted that the exterior ports on the rear of the conversion device also serve as access points for airflow. In addition, the side of the enclosure housing the heat sink **1701** and the fan **1702** may also be provided with suitable ventilation ports to assist in airflow. Such ventilation ports would allow the fan **1702** to ingest outside air to be blown on to the heat sink **1701.**

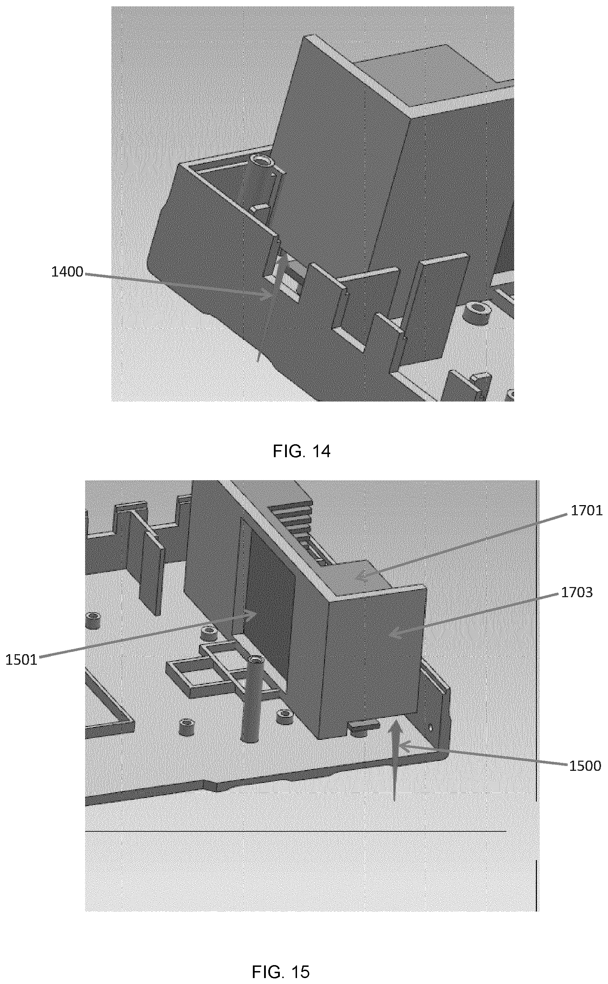

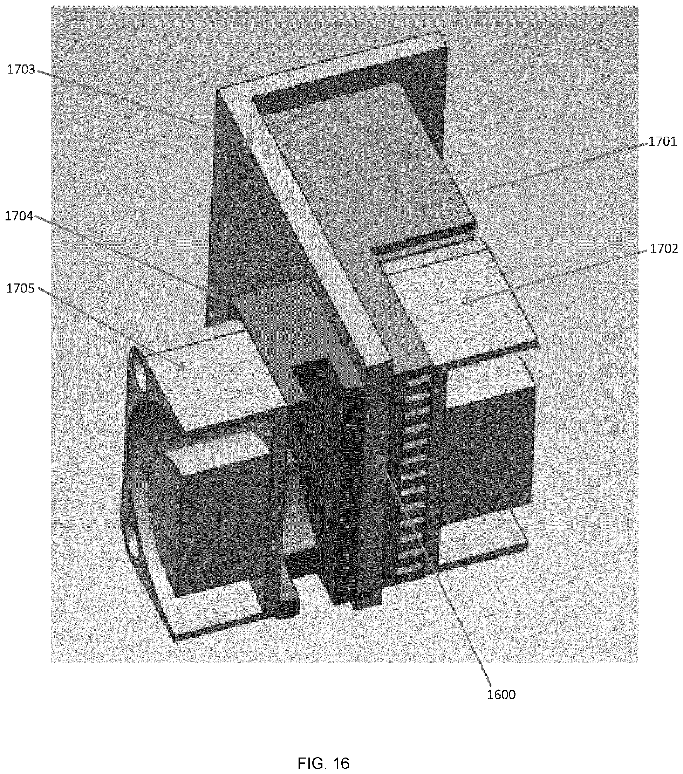

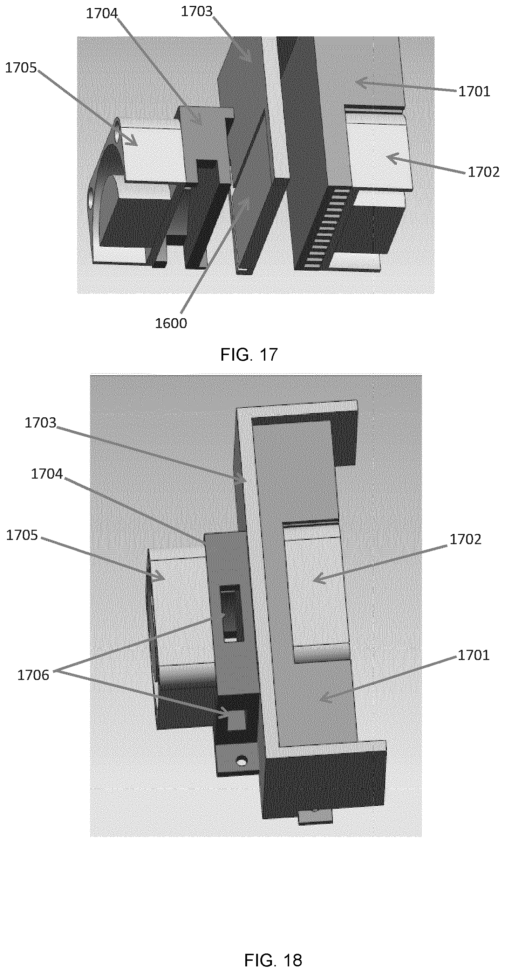

With specific reference to **Figure 15****,** the EVA foam **1703** is shown to include an airflow access point whereby the air flow path **1500** occurs. Likewise, the opposite side of the EVA foam as shown in **Figure 14** includes an airflow access point whereby the air flow path **1400** occurs. Both air flow paths **1400** and **1500** serve to allow air into the enclosure such that heat sink **1701** can be cooled by fan **1702.** In **Figure 15****,** there is also shown a square space **1501** adjacent the heat sink **1701.** The space **1501** is used to position the thermoelectric cooling pad **1600** as further shown with additional reference to **Figures 16** and **17****.** The thermoelectric cooling pad **1600** abuts the heat sink **1701** and serves to actively transfer its elevated (i.e., hot side) temperature to the heat sink **1701** as further described below. Simultaneously, the fan **1705** channels airflow from the cooling guide block **1704** (which collects air via openings **1706** from within the enclosure) and this airflow is cooled and subsequently expelled by the fan **1705** back into the enclosure. By channeling cooled air back into the enclosure, the fan **1705** thereby cools the interior of the enclosure as well as the PoC device. With reference to **Figure 18****,** the cooling mechanism of the conversion apparatus is shown in its complete and assembled state. In this manner, the interior of the conversion apparatus is maintained at a temperature range sufficient to ensure proper operation of all electronics located therein including maintaining the PoC device. Preferably, interior electronics and circuitry control the functioning of the thermoelectric cooling pad **1600** such that the cooling pad is activated at a certain temperature and is shut down once another (lower) temperature is achieved.

It should be readily apparent that the EVA foam **1703** serves to provide as a divider between the hot and the cold sides of the thermoelectric cooling pad **1600.** Thermoelectric cooling exhibited by the thermoelectric cooling pad **1600** may use the Peltier effect to create a heat flux at the junction of two different types of materials. Generally speaking, a Peltier cooler, heater, or thermoelectric heat pump is a solid-state active heat pump which transfers heat from one side of the device to the other, with consumption of electrical energy, depending on the direction of the current. Such an instrument is also called a Peltier device, Peltier heat pump, solid state refrigerator, or thermoelectric cooler (TEC) and occasionally a thermoelectric battery. It can be used either for heating or for cooling, although in terms of the present invention, the main application is cooling. The primary advantages of a Peltier cooler compared to a vapor-compression refrigerator are its lack of moving parts or circulating liquid, very long life, invulnerability to leaks, small size, and flexible shape. When operated as a cooler, a voltage is applied across the device, and as a result, a difference in temperature will build up between the two sides.

Effectively, the thermoelectric cooling pad **1600,** in accordance with the present invention, functions when the current applied goes through the pad, and the pad will start lowering the temperature at one side, thus the other side will become hotter while the other side gets colder. In this manner, the EVA foam **1703** acts as a barrier between the hot side of the pad and the cool side. The heat sink **1701** absorbs the heat generated by the hot side of the cooling pad **1600** and the fan **1702** disperses this heat from the heat sink **1701.** The cooling block guide **1704** receives hot air from within the enclosure and this hot air is cooled by the cold side of the thermoelectric cooling pad **1600.** The cooling block guide **1704** has four openings (two visible as **1706)** on its sides and thus enables air to be drawn in from within the interior of he enclosure. Warm air is cooled by the cooling block guide **1704** and the fan **1705** blows this cooled air back into the enclosure and on to the PoC device within the conversion apparatus. The mechanism thereby allows for a cooling of not just the PoC device but also of the conversion apparatus itself.

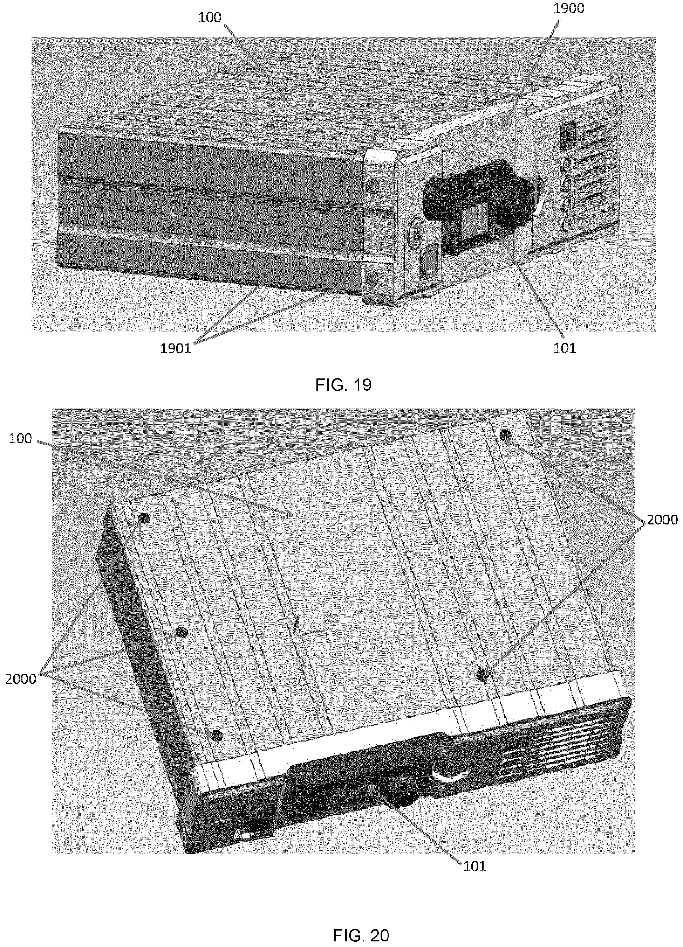

With reference to **Figure 19****,** there is shown a three-dimensional side view of the conversion apparatus **100** in accordance with the present invention showing external fastener features in the form of screws **1901** which are used to attach the faceplate **1900** to the body of the conversion apparatus. It should be understood that two additional screws (not visible) are also present similarly on the other side of the faceplate **1900.** **Figure 20** further shows external fastener features in the form of screws **2000** on the outer surface of the conversion apparatus **100.** All such external fasteners are provided to integrate the conversion apparatus **100** into a unitary structure.

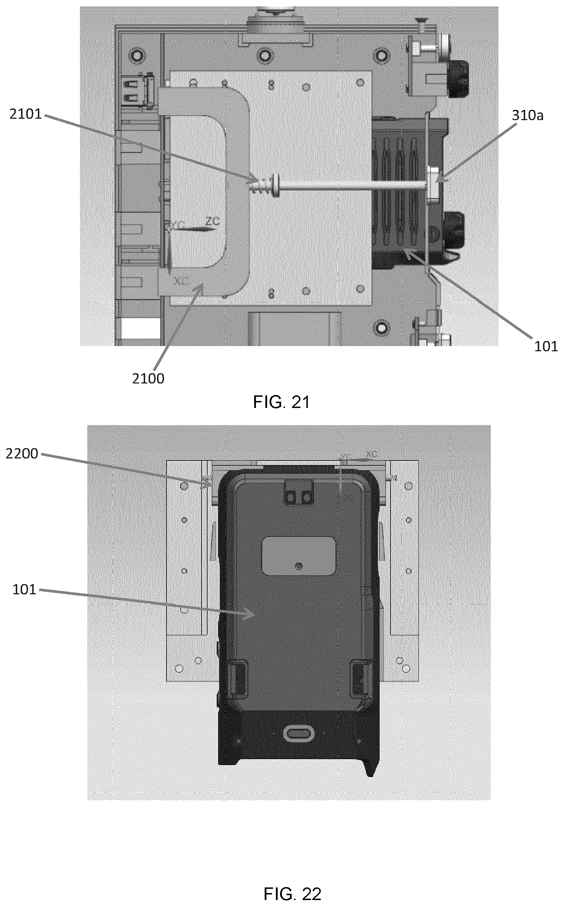

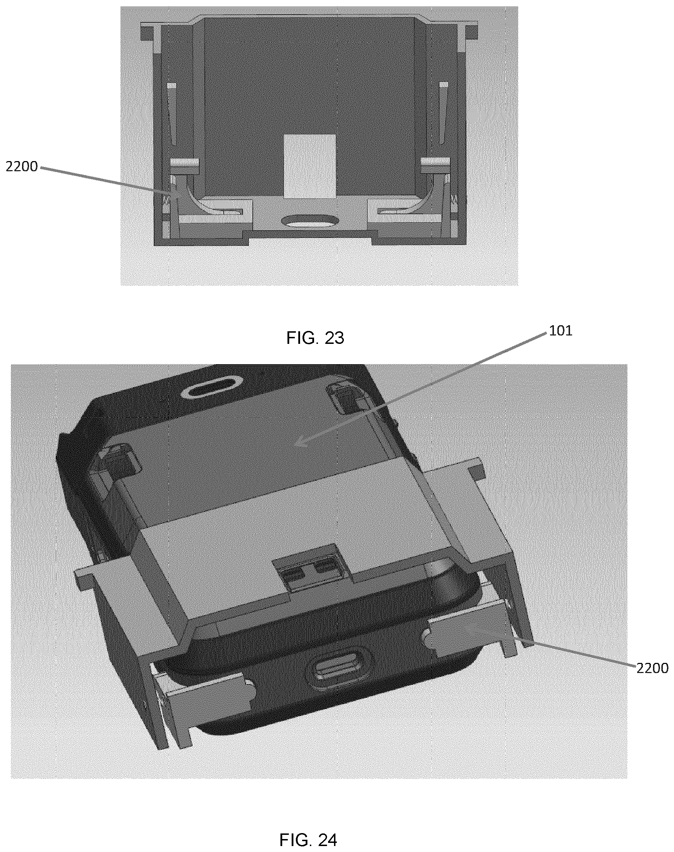

With reference to **Figures 21** through **24** there is shown an alternative configuration of a latching mechanism related to the insertion of the PoC device within the conversion apparatus in accordance with the present invention. **Figure 21** shows a push button **310a** similar to the above-mentioned release button **310.** The push button **310a** is held in a normally extended position by spring **2101.** Depressing the push button **310a** will cause element **2100** to engage with two lockers **2200** located at either side of the end of the PoC device **101.** In a manner known to one of skill in the mechanical art, the PoC device **101** may include a guide slit on each side with a notch in the end of it. When the PoC device **101** is pushed into place, the lockers **2200** on each side will lock to those notches in the end of the PoC device **101.** To release, a user may then press the push button **310a** and this will release these lockers **2200** allowing the PoC device **101** to be pulled out. It should be readily apparent that any other suitable mechanical ejection scheme may be used to insert, retain, and release the PoC device without straying from the intended scope of the present invention. It should be clear that the latching mechanism shown and described in relation to **Figures 21** to **23** would not use the springs **1101a** and **1101b** nor the bumpers **1103a** and **1103b.** For implementations using the configuration of the latching mechanism shown in **Figures 21** to **23****,** the springs and bumpers noted above may be omitted. However, such springs and bumpers may be used by alternative latching mechanisms.

A person understanding this invention may now conceive of alternative structures and embodiments or variations of the above all of which are intended to fall within the scope of the invention as defined in the claims that follow.

## Claims

1. A conversion apparatus (100) for receiving a cellular data device (101), said apparatus (100) comprising:
an enclosure;
an opening within said enclosure, said opening configured to accept therein said cellular data device (101);
a plurality of ports (601, 602, 604, 605, 606, 607) for interfacing said cellular data device (101) with at least one accessory;
circuitry located within said enclosure and enabling said cellular data device (101) to transfer data between a cellular network and at least one of said plurality of output ports (601, 602, 604, 605, 606, 607); and
**characterized by** an active cooling mechanism for active temperature control within said enclosure, said active cooling mechanism comprising:
at least one thermoelectric cooling pad (1600), wherein a hot side of said at least one thermoelectric cooling pad (1600) is adjacent a heat sink (1701) and a cool side of said at least one thermoelectric cooling pad (1600) is adjacent a cooling guide block (1704); and
at least two fans (1702, 1705), wherein at least one of said at least two fans (1702) cools said heat sink (1701) and another of said at least two fans (1705) blows cool air from said cooling guide block (1704) into an interior of said enclosure.

2. The conversion apparatus (100) according to claim 1, further including a conversion apparatus control knob (311) providing a first function enabled by said circuitry, wherein said first function is one of either channel selection or volume selection.

3. The conversion apparatus (100) according to claim 1 or 2, wherein said circuitry is for establishing an electrical connection between said conversion apparatus (100) and said cellular data service, and wherein said cellular data device is a push-to-talk over cellular, PoC, device, and optionally said electrical connection is a Universal Serial Bus Type C, USB-C, connection.

4. The conversion apparatus (100) according to claim 1, wherein said enclosure comprises ventilation ports to allow outside airflow to enter said enclosure,
said outside airflow being used to cool at least a portion of said conversion apparatus (100).

5. The conversion apparatus (100) according to any one of the preceding claims wherein said plurality of ports includes at least one of:
- a network interface port (605);
- an antenna port (601);
- a power connection port (602);
- a remote speaker connection port;
- a privacy handset connection port (604);
- a speaker port (606); and
- a connection port (607).

6. The conversion apparatus according to any one of the preceding claims further comprising a latching mechanism to releasably latch said cellular data device within said enclosure,
wherein optionally said latching mechanism comprises bumpers and springs mounted within said enclosure.

7. The conversion apparatus according to claim 6, wherein said latching mechanism comprises at least one locker deployed within said enclosure, said at least one locker, when engaged, engages at least one notch on said cellular data device to thereby latch said cellular data device within said enclosure.

## Patentansprüche

1. Umwandlungsvorrichtung (100) zur Aufnahme einer zellularen Datenvorrichtung (101), wobei die Vorrichtung (100) umfasst:
ein Gehäuse;
eine Öffnung in dem Gehäuse, wobei die Öffnung zur Aufnahme der zellularen Datenvorrichtung (101) eingerichtet ist;
eine Mehrzahl von Anschlüssen (601, 602, 604, 605, 606, 607) zum Koppeln der zellularen Datenvorrichtung (101) mit wenigstens einem Zubehörteil;
eine Schaltung, die in dem Gehäuse angeordnet ist und es der zellularen Datenvorrichtung (101) ermöglicht, Daten zwischen einem zellularen Netzwerk und wenigstens einem der Mehrzahl von Ausgangsanschlüssen (601, 602, 604, 605, 606, 607) zu übertragen; und
**gekennzeichnet durch** einen aktiven Kühlmechanismus zur aktiven Temperaturregelung in dem Gehäuse, wobei der aktive Kühlmechanismus umfasst:
wenigstens ein thermoelektrisches Kühlkissen (1600), wobei eine heiße Seite des wenigstens einen thermoelektrischen Kühlkissens (1600) an eine Wärmesenke (1701) angrenzt und eine kühle Seite des wenigstens einen thermoelektrischen Kühlkissens (1600) an einen Kühlführungsblock (1704) angrenzt; und
wenigstens zwei Lüfter (1702, 1705), wobei wenigstens einer der wenigstens zwei Lüfter (1702) die Wärmesenke (1701) kühlt und ein anderer der wenigstens zwei Lüfter (1705) kühle Luft von dem Kühlführungsblock (1704) in ein Inneres des Gehäuses bläst.

2. Umwandlungsvorrichtung (100) nach Anspruch 1, die ferner einen
Umwandlungsvorrichtungssteuerknopf (311) umfasst, der eine durch die Schaltung aktivierte erste Funktion bereitstellt, wobei es sich bei der ersten Funktion entweder um Kanalwahl oder Lautstärkenwahl handelt.

3. Umwandlungsvorrichtung (100) nach Anspruch 1 oder 2, wobei die Schaltung zum Herstellen einer elektrischen Verbindung zwischen der Umwandlungsvorrichtung (100) und dem zellularen Datendienst dient und wobei die zellulare Datenvorrichtung eine Push-to-Talk over Cellular-Vorrichtung (PoC) ist und
optional die elektrische Verbindung eine Universal Serial Bus Typ-C-Verbindung (USB-C) ist.

4. Umwandlungsvorrichtung (100) nach Anspruch 1, wobei das Gehäuse Belüftungsöffnungen aufweist, damit ein Außenluftstrom in das Gehäuse eintreten kann,
wobei der Außenluftstrom zur Kühlung wenigstens eines Abschnitts der Umwandlungsvorrichtung (100) dient.

5. Umwandlungsvorrichtung (100) nach einem der vorangehenden Ansprüche, wobei die Mehrzahl von Anschlüssen wenigstens einen der folgenden umfasst:
- einen Netzwerkschnittstellenanschluss (605);
- einen Antennenanschluss (601);
- einen Stromanschluss (602);
- einen Anschluss für einen entfernt liegenden Lautsprecher;
- einen Anschluss für ein privates Handgerät (604);
- einen Lautsprecheranschluss (606); und
- einen Verbindungsanschluss (607).

6. Umwandlungsvorrichtung nach einem der vorangehenden Ansprüche, die ferner einen Verriegelungsmechanismus umfasst, um die zellulare Datenvorrichtung in dem Gehäuse lösbar zu verriegeln,
wobei der Verriegelungsmechanismus optional in dem Gehäuse angebrachte Puffer und Federn umfasst.

7. Umwandlungsvorrichtung nach Anspruch 6, wobei der Verriegelungsmechanismus wenigstens einen Verschluss in dem Gehäuse umfasst, wobei der wenigstens eine Verschluss, sofern eingerastet, mit wenigstens einer Aussparung an der zellularen Datenvorrichtung in Eingriff steht, um dadurch die zellulare Datenvorrichtung in dem Gehäuse zu verriegeln.

## Revendications

1. Appareil de conversion (100) destiné à recevoir un dispositif de données cellulaires (101), ledit appareil (100) comprenant :
une enceinte ;
une ouverture à l'intérieur de ladite enceinte, ladite ouverture étant configurée pour recevoir ledit dispositif de données cellulaires (101) ;
une pluralité de ports (601, 602, 604, 605, 606, 607) pour interfacer ledit dispositif de données cellulaires (101) avec au moins un accessoire ;
des circuits situés au sein de ladite enceinte et permettant audit dispositif de données cellulaires (101) de transférer des données entre un réseau cellulaire et au moins un de ladite pluralité de ports de sortie (601, 602, 604, 605, 606, 607) ; et
**caractérisé par** un mécanisme de refroidissement actif pour une régulation active de la température au sein de ladite enceinte, ledit mécanisme de refroidissement actif comprenant :
au moins un bloc de refroidissement thermoélectrique (1600), dans lequel un côté chaud dudit au moins un bloc de refroidissement thermoélectrique (1600) est adjacent à un dissipateur thermique (1701) et un côté froid dudit au moins un bloc de refroidissement thermoélectrique (1600) est adjacent à un bloc de guidage de refroidissement (1704) ; et
au moins deux ventilateurs (1702, 1705), dans lequel au moins un desdits au moins deux ventilateurs (1702) refroidit ledit dissipateur thermique (1701) et un autre desdits au moins deux ventilateurs (1705) souffle de l'air frais depuis ledit bloc de guidage de refroidissement (1704) dans l'intérieur de ladite enceinte.

2. Appareil de conversion (100) selon la revendication 1, comprenant en outre un bouton de commande (311) d'appareil de conversion assurant une première fonction activée par lesdits circuits, dans lequel ladite première fonction est soit la sélection du canal, soit la sélection du volume.

3. Appareil de conversion (100) selon la revendication 1 ou 2, dans lequel lesdits circuits servent à établir une connexion électrique entre ledit appareil de conversion (100) et ledit service de données cellulaires, et dans lequel ledit dispositif de données cellulaires est un dispositif de messagerie instantanée par réseau cellulaire PoC, et, éventuellement, ladite connexion électrique est une connexion bus série universel de type C, USB-C.

4. Appareil de conversion (100) selon la revendication 1, dans lequel ladite enceinte comprend des orifices de ventilation pour permettre au flux d'air extérieur d'entrer dans ladite enceinte, ledit flux d'air extérieur étant utilisé pour refroidir au moins une partie dudit appareil de conversion (100).

5. Appareil de conversion (100) selon l'une quelconque des revendications précédentes, dans lequel ladite pluralité de ports comprend au moins l'un de :
- un port d'interface réseau (605) ;
- un port d'antenne (601) ;
- un port de connexion d'alimentation (602) ;
- un port de connexion pour haut-parleur distant ;
- un port de connexion pour combiné privé (604) ;
- un port pour haut-parleur (606) ; et
- un port de connexion (607).

6. Appareil de conversion selon l'une quelconque des revendications précédentes, comprenant en outre un mécanisme de verrouillage pour verrouiller de manière amovible ledit dispositif de données cellulaires à l'intérieur de ladite enceinte.
dans lequel éventuellement ledit mécanisme de verrouillage comprend des butoirs et des ressorts montés à l'intérieur de ladite enceinte.

7. Appareil de conversion selon la revendication 6, dans lequel ledit mécanisme de verrouillage comprend au moins un verrou déployé à l'intérieur de ladite enceinte, ledit au moins un verrou, lorsqu'il est engagé, s'engage dans au moins une encoche sur ledit dispositif de données cellulaires pour verrouiller ainsi ledit dispositif de données cellulaires à l'intérieur de ladite enceinte.
